# EUROPEAN PATENT APPLICATION

(11) **EP 1 232 937 A1**
(43) Date of publication of application: **21.08.2002**
(21) Application number: 00977880.4
(22) Date of filing: 22.11.2000
(51) Int. Cl.: B62H 1/12

(54) **AUXILIARY WHEEL SUPPORT ARM WITH TILTING FUNCTION**

(30) Priority: 24.11.1999 JP 37588899
(71) Applicant: Yoshida, Hiroshi, Sendai-shi, Miyagi 982-0011 (JP)
(72) Inventor: Yoshida, Hiroshi, Sendai-shi, Miyagi 982-0011 (JP)
(74) Representative: Flaccus, Rolf-Dieter, Dr.
(86) International application number: PCT/JP00/08258
(87) International publication number: WO 01/038163

(57) **Abstract**

When a bicycle with no auxiliary wheel turns at a curve, the driver inclines the vehicle body to take balance, but in the case where an auxiliary wheel is mounted to the bicycle, the conventional support arm that connects the bicycle and the auxiliary wheel is not bent, and therefore, the vehicle body does not fall, but on the other hand, it is impossible to do the practice to take balance by inclining the vehicle body, and it has been difficult to learn the driving technique. Furthermore, when the auxiliary wheel rises on a little projection on the road surface, the rear wheel of the bicycle is separated from the road surface, and the rotation of the rear wheel is not transferred to the road surface, so that the running has become impossible. The present invention eliminates these disadvantages. An auxiliary wheel support arm with inclination function comprises: an auxiliary wheel support arms and a bicycle support arm, wherein the auxiliary wheel support arm and the bicycle support arm connect the bicycle and the auxiliary wheel, the auxiliary wheel support arm partially overlapping with the bicycle support arm, the bicycle support arm and the auxiliary wheel support arm being vertically movably pivoted to each other at the end near to the bicycle in the overlap portion, the bicycle support arm and the auxiliary wheel support arm bound by an elastic member in the overlap portion,

## Description

### Technical Field

This invention relates to a support arm for an auxiliary wheel of a bicycle wherein the support arm that connects the auxiliary wheel and the bicycle can be elastically bent to incline the bicycle.

### Background Art

The conventional auxiliary wheel support arm could not be elastically bent. Considering that the basis of the driving technique of a bicycle is to take balance by inclining the vehicle body, it can be said that the conventional auxiliary wheel support arm wherein bending is impossible is nothing else but a falling preventing device of a bicycle.

Furthermore, such a device is also possible, where the bicycle support arm and the auxiliary wheel support arm are not overlapped onto each other, and they are merely pivoted to each other, and the bicycle support arm and the auxiliary wheel support arm are connected with an elastic member, so that elastic bending is possible, However, it can be said that in the case of this device, when a force is applied to the auxiliary wheel in the back and forth direction of the traveling direction by the collision to an obstacle on the road of the auxiliary wheel or the like, the force is concentrated to the pivot part to deform the support arm at the pivot part in the back and forth direction, and such a problem that the traveling direction of the auxiliary wheel is changed to a direction different from the traveling direction of the bicycle is caused, and the device cannot be used unless special reinforcing means is made.

When a bicycle with no auxiliary wheel turns at a curve, the driver takes balance by inclining the vehicle body to the side of turning. However, in the case of the bicycle with an auxiliary wheel using a conventional support arm, the support arm cannot be bent and the vehicle body cannot be inclined, and therefore, it does not fall, but on the other hand, it has been difficult to learn the driving technique since the practice of taking balance by inclining the vehicle body cannot be done. Furthermore, there have been many beginners who let the bicycle fall just at the moment when the auxiliary wheel is removed, and who make it furthermore difficult to learn the driving technique because of the feeling of fear thereof. The present invention is made to eliminate these disadvantages.

### Disclosure of Invention

The auxiliary wheel support arm with inclination function of the present invention has a vertically elastically bending part that is made at an intermediate way of the support arm connecting the bicycle and the auxiliary wheel.

That is, there is provided an auxiliary wheel support arm with inclination function comprising: an auxiliary wheel support arm; and a bicycle support arm, wherein said auxiliary wheel support arm and said bicycle support arm connect said bicycle and said auxiliary wheel, said auxiliary wheel support arm partially overlapping with said bicycle support arm, said bicycle support arm and said auxiliary wheel support arm being vertically movably pivoted to each other at the end near to the bicycle in the overlap portion, said bicycle support arm and said auxiliary wheel support arm bound by an elastic member in the overlap portion.

When the auxiliary wheel support arm with inclination function of the present invention is used, it becomes possible to do the practice of taking balance by inclining the vehicle body, which is the basis of the driving technique of a bicycle. It is largely different from the conventional auxiliary wheel support arm in the points that while the conventional auxiliary wheel support arm is merely a falling preventing device, the auxiliary wheel support arm with inclination function of the present invention can be elastically bent, and it is possible to do the practice of taking balance by inclining the vehicle body, which is the basis of the driving technique of a bicycle, and therefore, it can be called a bicycle driving training tool.

### Brief Description of Drawings

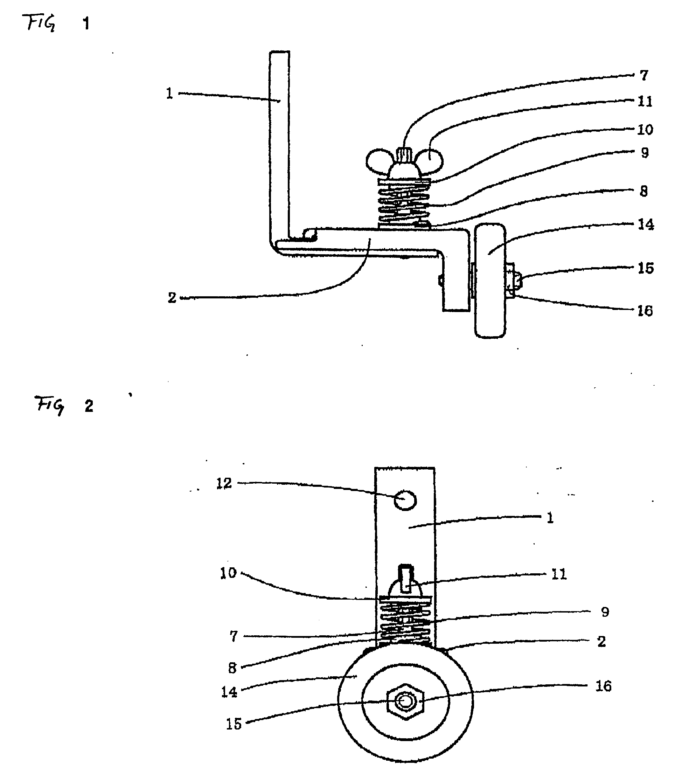

FIG. 1 is a front view of the preferred embodiment. Furthermore, a back view of the preferred embodiment is symmetrically shown except for the part of the spiral spring;
FIG. 2 is a right side view of the preferred embodiment;

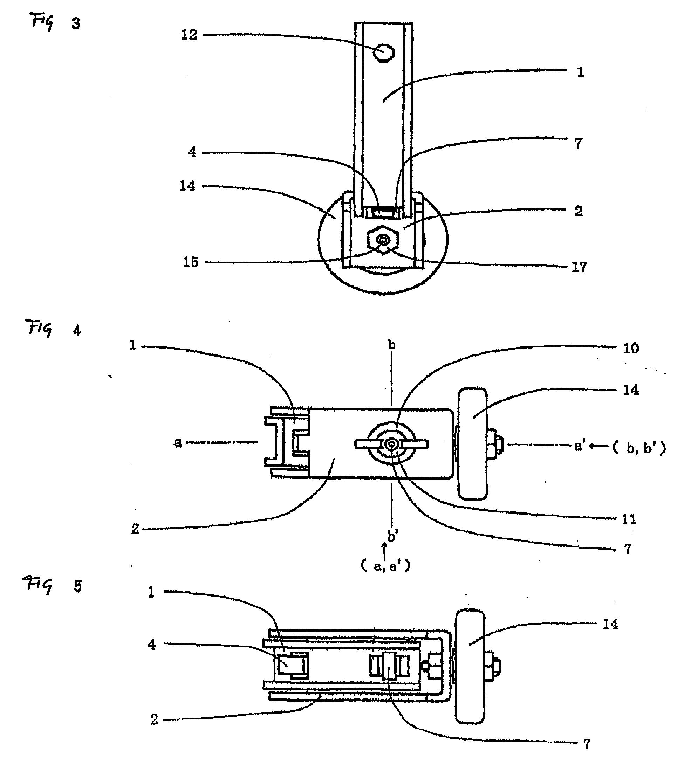

FIG. 3 is a left side view of the preferred embodiment;
FIG. 4 is a plan view of the preferred embodiment;

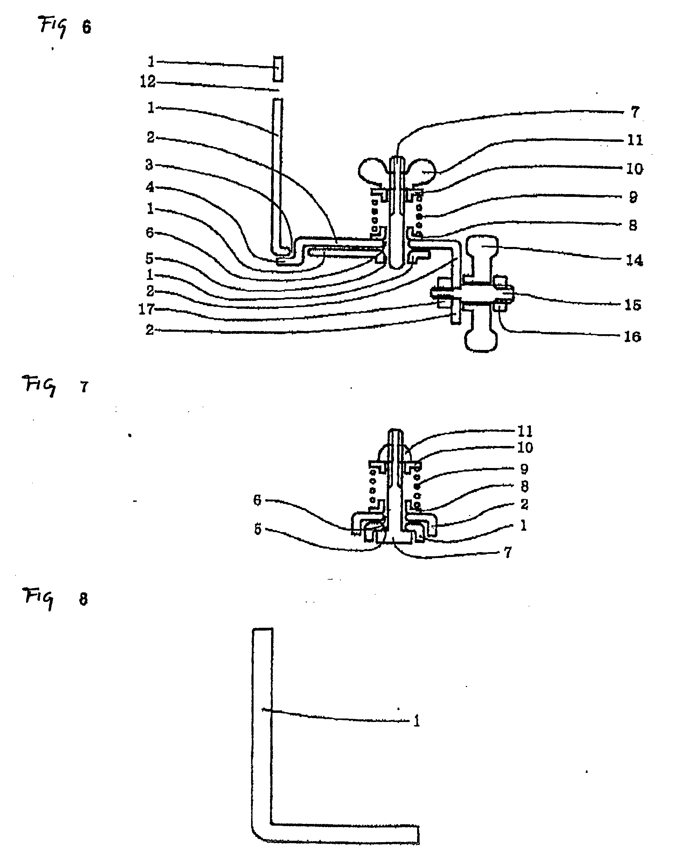

FIG. 5 is a bottom view of the preferred embodiment;
FIG. 6 is a cross sectional view of the part of a-a' in FIG. 4 when the preferred embodiment is seen from the front;
FIG. 7 is a cross sectional view of the part of b-b' in FIG. 4 when the binding bar portion of the preferred embodiment is seen from the right side;
FIG. 8 is a front view of a bicycle support arm of the preferred embodiment. Furthermore, a back view of the bicycle support arm of the preferred embodiment is symmetrically shown;

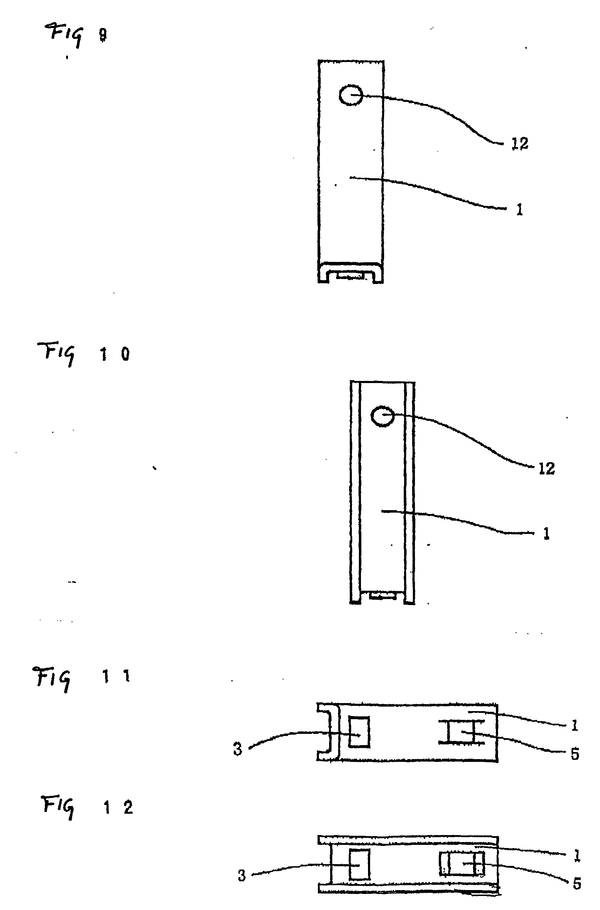

FIG. 9 is a right side view of the bicycle support arm of the preferred embodiment;
FIG. 10 is a left side view of the bicycle support arm of the preferred embodiments ;
FIG. 11 is a plan view of the bicycle support arm of the preferred embodiment;
FIG. 12 is a bottom view of the bicycle support arm of the preferred embodiment;

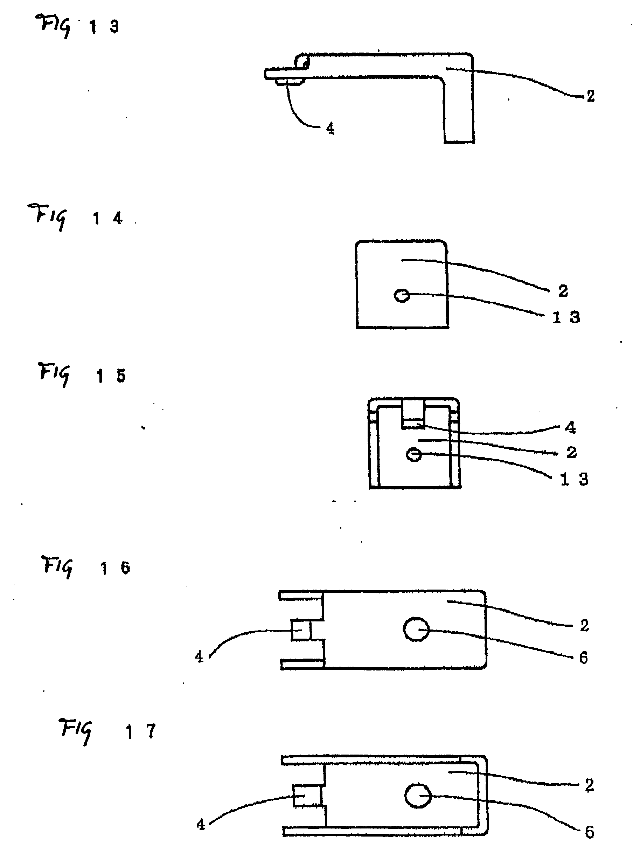

FIG. 13 is a front view of an auxiliary wheel support arm of the preferred embodiment, Furthermore, a back view of the auxiliary wheel support arm of the preferred embodiment is shown symmetrically;
FIG. 14 is a right side view of the auxiliary wheel support arm of the preferred embodiment;
FIG. 15 is a left side view of the auxiliary wheel support arm of the preferred embodiment;
FIG. 16 is a plan view of the auxiliary wheel support arm of the preferred embodiment;
FIG. 17 is a bottom view of the auxiliary wheel support arm of the preferred embodiment;

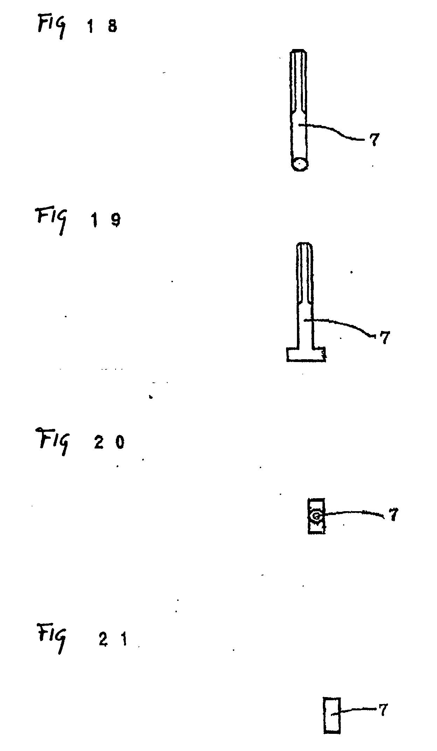

FIG. 18 is a front view of the binding bar of the preferred embodiment. Furthermore, a back view of the binding bar of the preferred embodiment is shown symmetrically;
FIG. 19 is a right side view of the binding bar of the preferred embodiment. Furthermore, a left side view of the binding bar of the preferred embodiment is shown symmetrically;
FIG. 20 is a plan view of the binding bar of the preferred embodiment; and
FIG. 21 is a bottom view of the binding bar of the preferred embodiment.

Each numeral is expalained below.
- 1: bicycle support arm
- 2: auxiliary wheel support arm
- 3: hole
- 4: projection
- 5: hole

- 6: hole
- 7: binding bar
- 8: spring bracket
- 9: spiral spring
- 10: spring bracket
- 11: spring clamping nut
- 12: hole for mounting a back wheel shaft of bicycle
- 13: hole for mounting a auxiliary wheel shaft
- 14: auxiliary wheel
- 15: auxiliary wheel shaft
- 16: auxiliary wheel stopping nut
- 17: auxiliary wheel shaft stopping nut

### Best Mode for Carrying Out the Invention

The preferred embodiment of the present invention will be described below. First of all, at part of the intermediate way of the support arm connecting the bicycle and the auxiliary wheel, the bicycle support arm 1 positioned below and the auxiliary wheel support arm 2 positioned above are overlapped onto each other.

Then, at the part of the end near to the bicycle in the overlapped support arm parts, a hole 3 is pierced in the bicycle support arm 1, and a projection 4 is made at the end of the auxiliary wheel support arm 2, and the projection 4 is inserted into the hole 3, so that the vertically movable pivoting is made.

Then, a hole 5 and a hole 6 are pierced vertically coaxially in the bicycle support arm 1 and the auxiliary wheel support arm 2 at the overlapped support arm parts, respectively.

Then, a binding bar 7 having a lower end being bigger than the hole 5 and having a screw thread made at the upper part thereof is passed through the hole 5 and the hole 6 from the lower side.

Then, a spring bracket 8, a spiral spring 9, and a spring bracket 10 are in turn put on the binding bar 7 from the upper side.

Then, a spring clamping nut 11 is attached to the screw thread part at the upper part of the binding bar 7.

### Industrial Applicability

The auxiliary wheel support arm with inclination function of the present invention can be elastically bent, and therefore, the beginner can do the practice of keeping balance by inclining the vehicle body without having anxiety of falling of the vehicle body. Accordingly, when the auxiliary wheel support arm with inclination function of the present invention is used, the learning of the bicycle driving technique becomes easier by leaps and bounds than that in the case where the conventional auxiliary wheel is used.

Furthermore, in the case of the bicycle with an auxiliary wheel using the conventional support arm, when the auxiliary wheel rides on a little projection on the road surface, the rear wheel of the bicycle is separated from the road surface, and the rotation of the rear wheel cannot be transferred to the road surface, and therefore, the running may become impossible, but if the auxiliary wheel support arm with inclination function of the present invention is used, the support arm can be elastically bent, and therefore, such an event does not occur.

Moreover, in the case of the preferred embodiment of the auxiliary wheel support arm with inclination function of the present invention, it is possible to control the strength of the spiral spring 9 and the maximum angle of bending of the support arm by adjusting the degree of clamping of the spring clamping nut 11. Accordingly, the state can gradually be adjusted from a state of the conventional auxiliary wheel support arm where the support arm cannot be bent to a state near the state where an auxiliary wheel whose support arm can largely be bent is not used, according to the degree of learning of the driving technique, and therefore, the learning of the driving Lechnique becomes further easier.

Furthermore, in the case of the auxiliary wheel support arm with inclination function of the present invention, the bicycle support arm and the auxiliary wheel support arm are united, and therefore, even if a force is applied onto the auxiliary wheel in the back and forth direction of the traveling direction, the force is not concentrated only to the supported part. Accordingly, even if the force is applied onto the auxiliary wheel in the back and forth direction of the traveling direction, the support arm is distorted in the back and forth direction at the pivoted part, and it is not to cause such a problem that the traveling direction of the auxiliary wheel is changed to a direction different from the traveling direction of the bicycle.

## Claims

1. An auxiliary wheel support arm with inclination function comprising:
an auxiliary wheel support arm; and
a bicycle support arm,
wherein said auxiliary wheel support arm and said bicycle support arm connect said bicycle and said auxiliary wheel, said auxiliary wheel support arm partially overlapping with said bicycle support arm, said bicycle support arm and said auxiliary wheel support arm being vertically movably pivoted to each other at the end near to the bicycle in the overlap portion, said bicycle support arm and said auxiliary wheel support arm bound by an elastic member in the overlap portion.
